# EUROPEAN PATENT SPECIFICATION

(11) **EP 2 992 054 B1**
(45) Date of publication and mention of the grant of the patent: **04.01.2017**
(21) Application number: 14717138.3
(22) Date of filing: 11.04.2014
(51) Int. Cl.: C09B 31/043, C09B 31/047, C11D 3/40, C09B 33/02, C09B 69/00

(54) **ALKOXYLATED BIS AZO DYES**
ALKOXYLIERTE BIS-AZOFARBSTOFFE
COLORANTS AZOÏQUES BIS ALCOXYLÉS

(30) Priority: 03.05.2013 EP 13166374
(43) Date of publication of application: 09.03.2016
(73) Proprietor: Unilever PLC, London, Greater London EC4Y 0DY (GB); Unilever N.V., 3013 AL Rotterdam (NL)
(72) Inventor: BATCHELOR, Stephen Norman, Wirral Merseyside CH63 3JW (GB); BIRD, Jayne Michelle, Wirral Merseyside CH63 3JW (GB)
(74) Representative: Avila, David Victor
(86) International application number: PCT/EP2014/057420
(87) International publication number: WO 2014/177369

(56) References cited:
- WO-A1-99/24659
- WO-A1-2008/087497
- WO-A2-2010/151906
- GB-A- 1 393 393

## Description

### Field of the Invention

The present invention concerns the use of dyes in laundry compositions.

### Background of Invention

WO2006/045375 (Unilever), WO2008/087497(P&G), WO2012/166768 (P&G), and WO2011/011799 (P&G) disclose alkoxylated mono-azo for the shading of textiles from domestic laundry detergent products. The dyes do not have sulphonated groups directly attached to the aromatic rings of the dye.

WO2011/098356 (Unilever) and WO2012/054835 (P&G) disclose alkoxylated bis-azo dyes that have sulphonate groups directly attached to the aromatic rings of the dye.

Polyester fibres are ubiquitous in modern clothing.

There is a need for azo alkoxylated shading dyes with higher relative deposition to polyester than cotton, to allow targeting of polyester fibres.

### Summary of the Invention

In one aspect the present invention provides a laundry composition comprising between 0.0001 to 1.0 wt%, preferably 0.0005 to 0.2 wt%, of an alkoxylated bis azo-dye and 2 to 70 wt% of a surfactant, wherein the alkoxylated bis azo-dye is of the form: 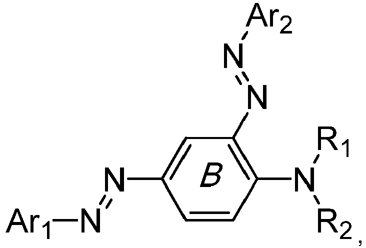 wherein:
only R1 and R2 may bare charged groups;
Ar₁ and Ar₂ are aromatic groups selected from: phenyl and heteroaromatic;
R₁ and R₂ is independently selected from: H; alkyl; alkyl-aryl; and aryl; polyoxyalkylene chains having from 2 to 20 repeating, preferably 2 to 10 repeating units, wherein the polyoxyalkylene chain is covalently bound to at least one group selected from: SO₃⁻; CO₂⁻; quaternary ammonium; OH; -OC1-C20-alkyl; -OC1-C20-alkene; acid amide and ester, wherein at least one of R₁ and R₂ is the polyoxyalkylene chain.

When a charged group is covalently attached to R₁ and/or R₂ it is preferably selected from SO₃ and CO₂⁻.

In another aspect the present invention provides a domestic method of treating a textile, the method comprising the steps of:
(i) treating a textile with an aqueous solution of the alkoxylated bis azo-dye, the aqueous solution comprising from 1 ppb to 5000ppm, more preferably 10ppb to 10ppm most preferably 100 ppb to 5 ppm, of the alkoxylated bis azo-dye; and, from 0.0 g/L to 3 g/L, preferably 0.2 to 3 g/L, of a surfactant; and, (ii) optionally rinsing and drying the textile.

In a further aspect the present invention provides the alkoxylated bis azo-dye per se.

### Detailed Description of the Invention

Uncharged groups are ones that are uncharged in aqueous solution at a pH in the range from 7 to 11. In the alkoxylated bis azo-dyes of the present invention only R₁ and R₂ may bare charged groups. The charged groups are for example, carboxylate, sulphonate, and quaternary ammonium groups. A nitro is group within the context of the present invention is not considered to be charged. A hydroxy is group within the context of the present invention is not considered to be charged.

Where aryl is specified, in all cases the preferred aryl is phenyl. Preferred alkyl-aryl is - CH₂-phenyl.

Where alkyl is specified with regard to R1 and R2 it is preferably C1-C10-n-alkyl, most preferably Me or Et.

Where quaternary ammonium is specified with regard to R1 and R2 it is preferably -N⁺(Me)₃ or -N⁺(Et)₃.

Where OC1-C20-alkyl is specified with regard to R1 and R2 it is preferably OC1-C10-n-alkyl, most preferably OMe.

Where -OC1-C20-alkene is specified with regard to R1 and R2 it is preferably OC1-C10-n-alkene.

Where ester is specified with regard to R1 and R2 it is preferably - OCOCH2CH(COOH)CH2CH=CHR5, where R5 is an alkyl group, preferably R5 is a C3 to C10 linear alkyl chains.

Where acid amide is specified with regard to R1 and R2 it is preferably - NCOCH2CH(COOH)CH2CH=CHR5, where R5 is an alkyl group, preferably R5 is a C3 to C10 linear alkyl chains.

Preferably, one or more of Ar₁ and Ar₂ is substituted by one or more groups selected from: amines, acid amides, alkyl, halides, NO₂, CN, alkysulfonyl, -Oalkyl; and ester. More preferably, one or more of Ar₁ and Ar₂ is substituted by one or more groups selected from: CN; F; Cl; Br; NO₂; CH₃; C₂H₅; OCH₃; OC₂H₅; NHCOCH₃; COOCH₃; COOC₂H₅; OCOCH₃; OCOC₂H₅; and, CH₃SO₂.

Preferably, the polyoxyalkylene chain is selected from: ethylene oxide; propylene oxide; glycidol oxide; butylene oxide; and, mixtures thereof. Most preferably, the polyoxyalkylene chain is: ethylene oxide.

The B ring may be further substituted. Preferably, the B ring is substituted by one or more groups selected from: acid amide; Oalkyl; and, alkyl. More preferably, the B ring is substituted by one or more groups selected from: NHCOCH₃; CH₃; and, C₂H₅.

Preferably, at least one of Ar₁ and Ar₂ is a heteroaromatic group.

Preferably, Ar₁ and Ar₂ are identical.

The heteroatom of the heteroaromatic group is preferably N, O and S, most preferably N and S. Preferably the heteroatom(s) of the heteroaromatic groups is part of a five or six membered ring. Preferably the heteroaromatic is a monocyclic six of five membered heterocyclic aromatic groups. Preferably the heteroaromatic is selected from thiophene, thiazole, isothiazole, thiadiazole and pyridinyl. Most preferably the heteroaromatic is a thiophene.

Preferred aromatic groups are selected from:

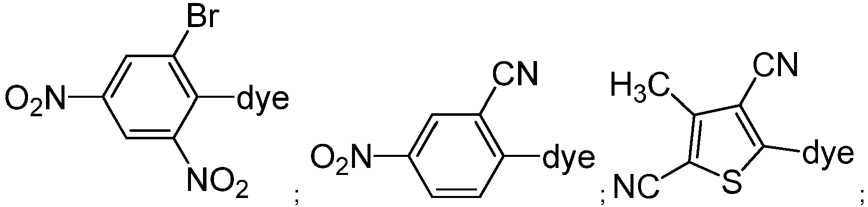

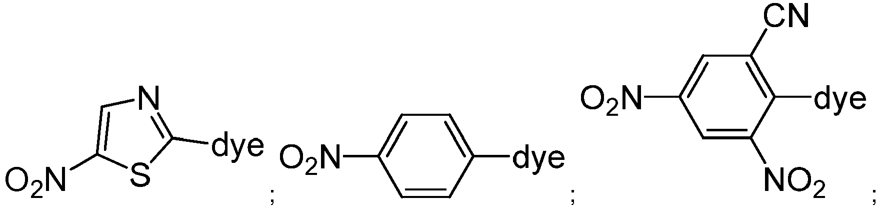

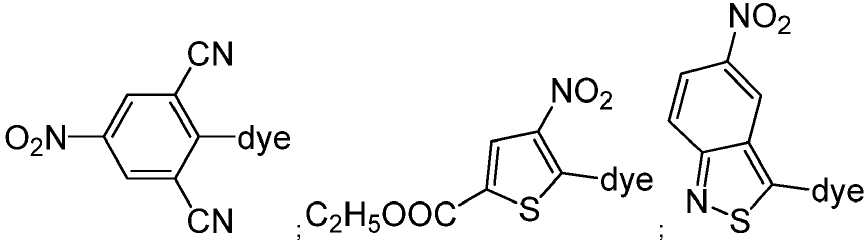

Preferred structures are: 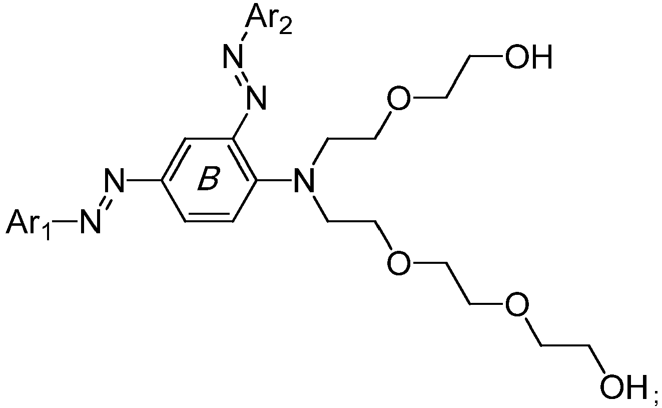 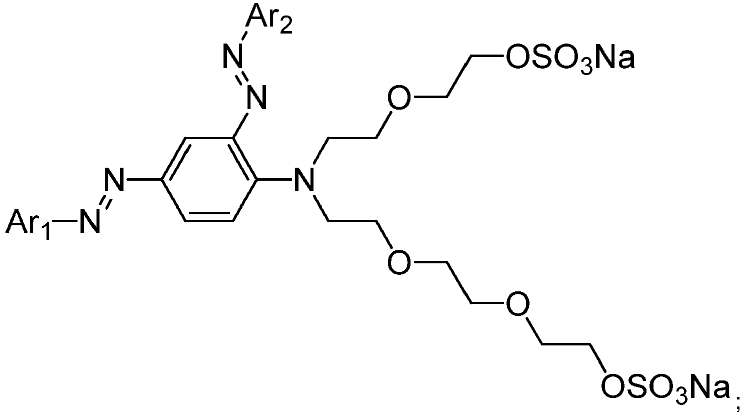 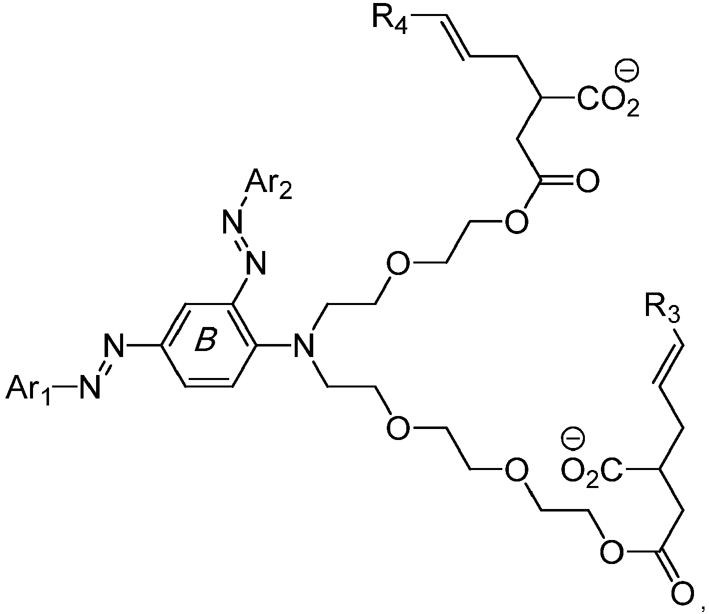 where R₃ and R₄ are alkyl groups, preferably C3 to C10 linear alkyl chains.

Further examples of the dyes are:

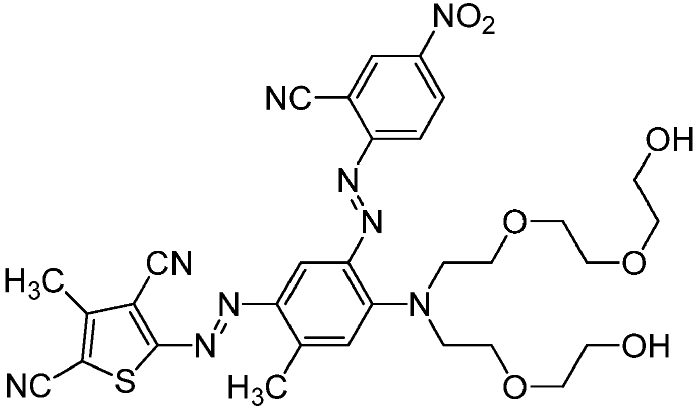

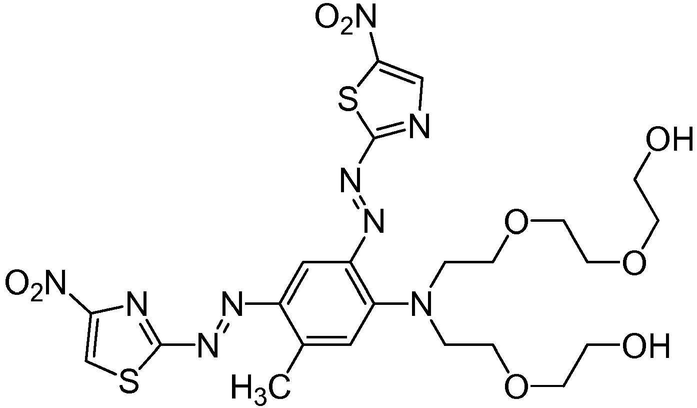

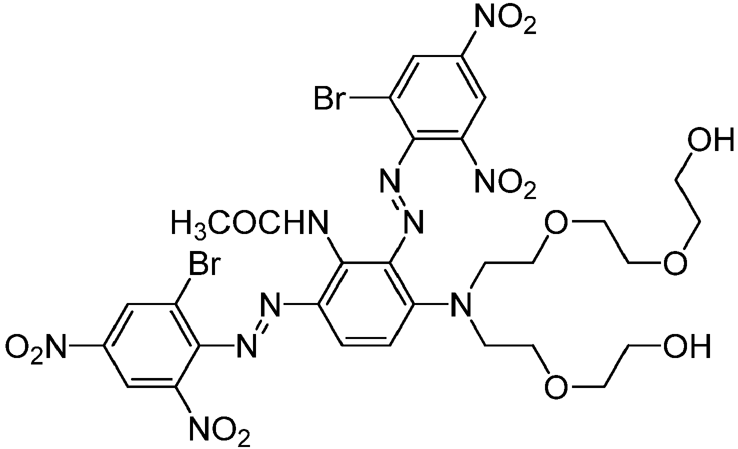

Most preferably:

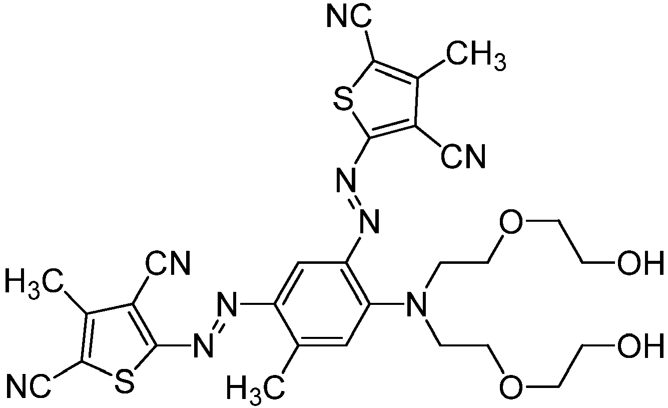

Preferably the dyes are blue or violet. Most preferably the dyes provide a blue or violet shade to polyester and 65/35 polycotton. Most preferably they provide a hue angle of 240 to 340, more preferably 260 to 320 on 65/35 white woven polycotton fabric.

### Other Dyes

In a preferred embodiment of the invention, other shading colourants may be present. They are preferably selected from hydrophobic dyes more preferably solvent and disperse dyes such as solvent violet 13, disperse violet 27, disperse violet 28 and alkoxylated thiophene dyes.

A hydrophobic dye is uncharged pH = 8.

Even more preferred is the presence of acid azine dyes as described in WO 2008/017570; the level of the acid azine dyes should be in the range from 0.0001 to 0.1 wt%. The acid azine dyes provide benefit predominately to the pure cotton garments and the cationic phenazine dyes to the polycotton garments. Preferred acid azine dyes are acid violet 50, acid blue 59 and acid blue 98. Blue and Violet cationic phenazine dyes may also be present as discussed in WO2009/141172 and WO2009/141173.

Photobleaches such as sulphonated Zn/Al phthalocyanins may be present.

### Surfactant

The laundry composition comprises between 2 to 70 wt percent of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are C₆ to C₂₂ alkyl phenol-ethylene oxide condensates, generally 5 to 25 EO, i.e. 5 to 25 units of ethylene oxide per molecule, and the condensation products of aliphatic C₈ to C₁₈ primary or secondary linear or branched alcohols with ethylene oxide, generally 5 to 40 EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher C₈ to C₁₈ alcohols, produced for example from tallow or coconut oil, sodium and potassium alkyl C₉ to C₂₀ benzene sulphonates, particularly sodium linear secondary alkyl C₁₀ to C₁₅ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium C₁₁ to C₁₅ alkyl benzene sulphonates and sodium C₁₂ to C₁₈ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a C₁₆ to C₁₈ primary alcohol sulphate together with a C₁₂ to C₁₅ primary alcohol 3 to 7 EO ethoxylate.

The nonionic detergent is preferably present in amounts less than 50wt%, most preferably less than 20wt% of the surfactant system. Anionic surfactants can be present for example in amounts in the range from about 50% to 100 wt % of the surfactant system.

In another aspect which is also preferred the surfactant may be a cationic such that the formulation is a fabric conditioner.

### Cationic Compound

When the present invention is used as a fabric conditioner it needs to contain a cationic compound.

Most preferred are quaternary ammonium compounds.

It is advantageous if the quaternary ammonium compound is a quaternary ammonium compound having at least one C₁₂ to C₂₂ alkyl chain.

It is preferred if the quaternary ammonium compound has the following formula: 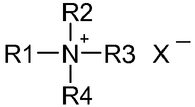 in which R¹ is a C₁₂ to C₂₂ alkyl or alkenyl chain; R², R³ and R⁴ are independently selected from C₁ to C₄ alkyl chains and X- is a compatible anion. A preferred compound of this type is the quaternary ammonium compound cetyl trimethyl quaternary ammonium bromide.

A second class of materials for use with the present invention are the quaternary ammonium of the above structure in which R¹ and R² are independently selected from C₁₂ to C₂₂ alkyl or alkenyl chain; R³ and R⁴ are independently selected from C₁ to C₄ alkyl chains and X- is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Procter and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

### Builders or Complexing Agents

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetra-acetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

0.8-1.5 M₂O. Al₂O₃. 0.8-6 SiO₂

where M is a monovalent cation, preferably sodium. These materials contain some bound water and are required to have a calcium ion exchange capacity of at least 50 mg CaO/g. The preferred sodium aluminosilicates contain 1.5-3.5 SiO₂ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate. Preferably the laundry detergent formulation is carbonate built.

### Fluorescent Agent

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

### Perfume

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

### Polymers

The composition may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

### Enzymes

One or more enzymes are preferred present in a composition of the invention and when practicing a method of the invention.

Preferably the level of each enzyme is from 0.0001 wt% to 0.1 wt% protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces),* e.g. from *H. lanuginosa (T. lanuginosus)* as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids.

Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases A₁ and A₂ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

The enzyme and the shading dye may show some interaction and should be chosen such that this interaction is not negative. Some negative interactions may be avoided by encapsulation of one or other of enzyme or shading dye and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™ , and FN3™ (Genencor International Inc.).

The method of the invention may be carried out in the presence of cutinase. classified in EC 3.1.1.74. The cutinase used according to the invention may be of any origin. Preferably cutinases are of microbial origin, in particular of bacterial, of fungal or of yeast origin. Suitable amylases (alpha and/or beta) include those of bacterial or fungal origin. Chemically modified or protein engineered mutants are included. Amylases include, for example, alpha-amylases obtained from *Bacillus,* e.g. a special strain of *B*. *licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™ , Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from C. *cinereus,* and variants thereof as those described in WO 93/24618, WO 95/10602, and WO 98/15257. Commercially available peroxidases include Guardzyme™ and Novozym™ 51004 (Novozymes A/S).

Further enzymes suitable for use are discussed in WO2009/087524, WO2009/090576, WO2009/107091, WO2009/111258 and WO2009/148983.

### Enzyme Stabilizers

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Where alkyl groups are sufficiently long to form branched or cyclic chains, the alkyl groups encompass branched, cyclic and linear alkyl chains. The alkyl groups are preferably linear or branched, most preferably linear.

The indefinite article "a" or "an" and its corresponding definite article "the" as used herein means at least one, or one or more, unless specified otherwise.

Dye weights refer to the sodium or chloride salts unless otherwise stated.

Preferably the laundry treatment composition is in a plastic bag, plastic box or a cardboard box.

For ease of use it is preferred that the laundry treatment composition is present in 0.5 to 5kg packs.

### Experimental

The following dyes were used:

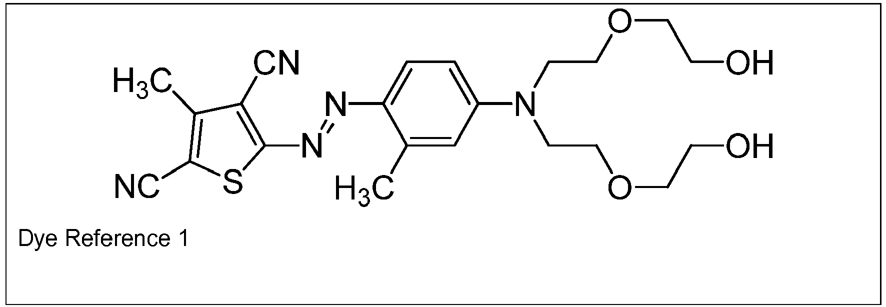

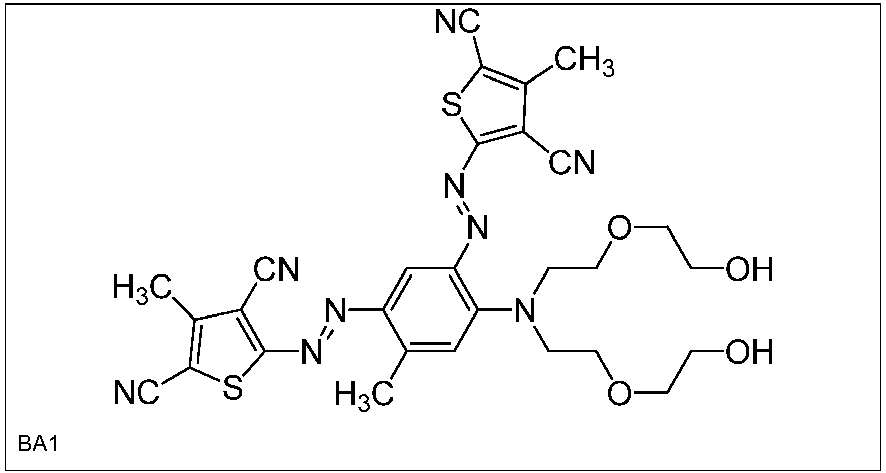

### Example 1

0.01wt% of the dyes were dissolve in a liquid detergent of the following formulation.

| **Ingredient** | **Wt%** |
|---|---|
| Mono propylene glycol | 15 |
| NaOH | to pH=6.5 |
| triethylamine | 2 |
| Alcohol ethoxylate (C12-C15 primary alcohol with 7 moles of ethoxylate (EO)) | 7.3 |
| Sodium lauryl ether sulphate(3EO) | 2.4 |
| Linear alkyl benzene sulfonic acid | 4.9 |
| Hydrogenated topped palm kernel fatty acids | 0.9 |
| Carbobetaine | 0.9 |
| Proxel (preservative) | 0.02 |
| Perfume | 1.4 |
| Demin water | Remainder |

The formulation was dosed at 4g/L into 13°FH water in tergotometer pots and a 10 by 10 cm piece of woven cotton, knitted cotton, 65/35 polycotton, microfiber polyester and 80/20 nylon-elastane fabric added to the water so that the Liquor to cloth ration was 100:1. The wash solution was agitated at 200rpm for 1 hour at room temperature, the cloth rinsed in 13°FH water, and dried. The colour of the cloth was then measured using a reflectometer and expressed as the CIE L*a*b*.

The colour change relative to a control washed without dye was expressed as the Δb value Δb = b(control) - b(dye).

The relative deposition to the fabrics was calculated relative to the polycotton fabric. The values for woven and knitted cotton were averaged to give a single value for cotton.

The results are given in the table below.

| | **cotton** | **polycotton** | **polyester** | **Nylon-elastane** |
|---|---|---|---|---|
| Dye reference 1 | 98 | 100 | 63 | 264 |
| Dye inventive | 12 | 100 | 86 | 160 |

BA1 has a greater relative deposition to polyster and polycotton than cotton. An additional advantage is that is shows lower relative deposition to nylon-elastane, thereby preventing over-blueing on this fabric.

## Claims

1. A laundry composition comprising between 0.0001 to 1.0 wt% of an alkoxylated bis azo-dye and 2 to 70 wt% of a surfactant, wherein the alkoxylated bis azo-dye is of the form: 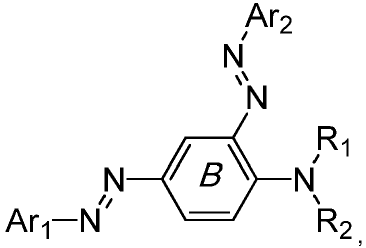 wherein:
only R1 and R2 may bare charged groups;
Ar₁ and Ar₂ are aromatic groups selected from: phenyl and heteroaromatic;
R₁ and R₂ is independently selected from: H; alkyl; alkyl-aryl; and aryl; polyoxyalkylene chains having from 2 to 20 repeating, wherein the polyoxyalkylene chain is covalently bound to at least one group selected from: SO₃⁻; CO₂⁻; quaternary ammonium; OH; - OC1-C20-alkyl; -OC1-C20-alkene; acid amide and ester, wherein at least one of R₁ and R₂ is the polyoxyalkylene chain.

2. A laundry composition according to claim 1, wherein one or more of Ar₁ and Ar₂ is substituted by one or more groups selected from: amines, acid amides, alkyl, halides, NO₂, CN, alkysulfonyl, -Oalkyl; and ester.

3. A laundry composition according to claim 2, wherein one or more of Ar₁ and Ar₂ is substituted by one or more groups selected from: CN; F; Cl; Br; NO₂; CH₃; C₂H₅; OCH₃; OC₂H₅; NHCOCH₃; COOCH₃; COOC₂H₅; OCOCH₃; OCOC₂H₅; and, CH₃SO₂.

4. A laundry composition according to any one of the preceding claims, wherein the polyoxyalkylene chain is selected from: ethylene oxide; propylene oxide; glycidol oxide; butylene oxide; and, mixtures thereof.

5. A laundry composition according to any one of the preceding claims, wherein the B ring is substituted by one or more groups selected from: acid amide; Oalkyl; and, alkyl.

6. A laundry composition according to claim 5, wherein the B ring is substituted by one or more groups selected from: NHCOCH₃; CH₃; and, C₂H₅.

7. A laundry composition according to any one of the preceding claims, wherein the polyoxyalkylene chain(s) has from 2 to 10 repeating units.

8. A laundry composition according to any one of the preceding claims, wherein at least one of Ar₁ and Ar₂ is a heteroaromatic group.

9. A laundry composition according to any one of the preceding claims, wherein Ar₁ and Ar₂ are identical.

10. A laundry composition according to any one of the preceding claims, wherein the heteroaromatic is selected from: thiophene; thiazole; isothiazole; thiadiazole; and, pyridinyl.

11. A laundry composition according to any one of the preceding claims, wherein the aromatic groups are selected from:

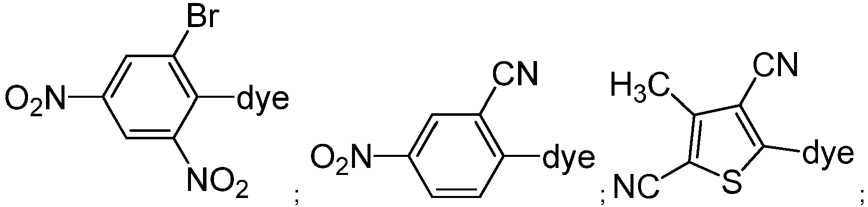

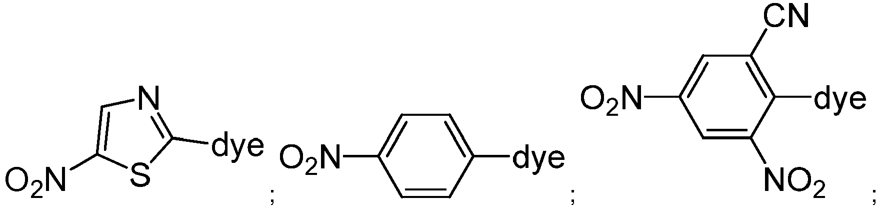

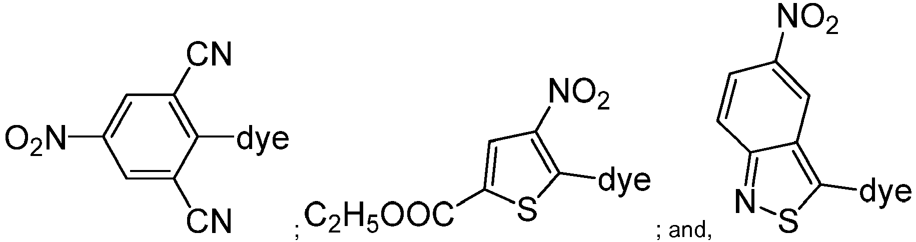

12. A laundry composition according to any preceding claim, wherein the alkoxylated bis azo-dye is selected from: 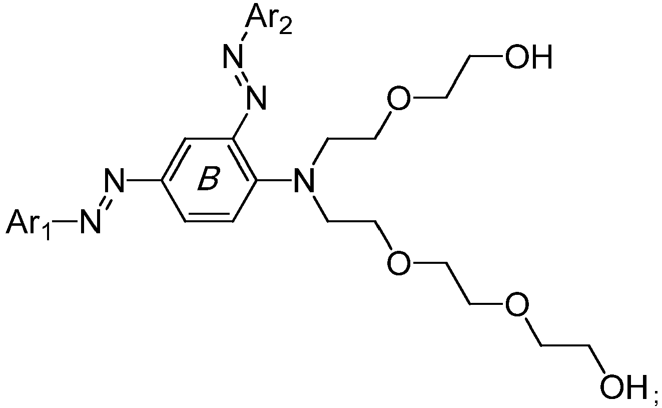 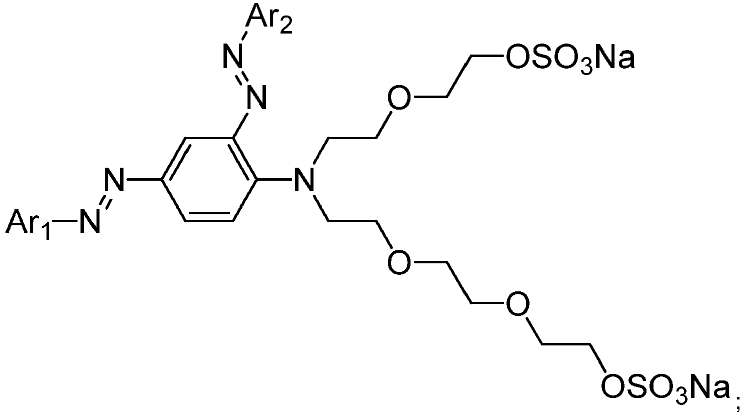 and, 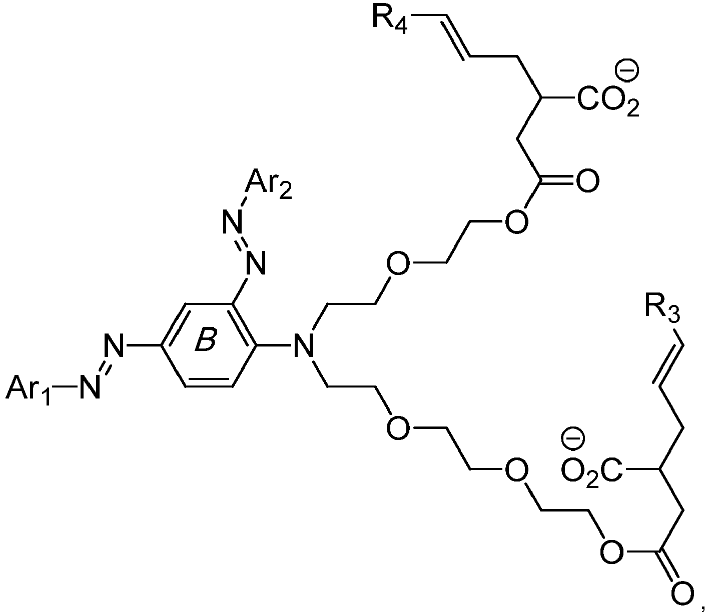 wherein R₃ and R₄ are alkyl groups.

13. A laundry composition according to claim 12, wherein R₃ and R₄ are C3-C10 linear alkyl chains.

14. A laundry composition according to claim 12 or 13, wherein Ar₁ and Ar₂ are:

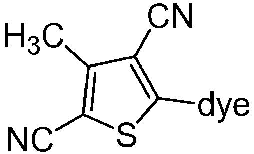

15. The alkoxylated bis azo-dye as defined in any preceding claim.

16. The alkoxylated bis azo-dye as defined in any one of claims 12 to 14.

17. A domestic method of treating a textile, the method comprising the steps of:
(i) treating a textile with an aqueous solution of the alkoxylated bis azo-dye as defined in any one of claims 1 to 14, the aqueous solution comprising from 1 ppb to 5000 ppm, of the alkoxylated bis azo-dye; and, from 0.0 g/L to 3 g/L of a surfactant; and,
(ii) optionally rinsing and drying the textile.

18. A domestic method of treating a textile according to claim 17, wherein the aqueous solution comprises from 0.2 to 3 g/L of a surfactant.

19. A domestic method of treating a textile according to claim 17 or 18, wherein the aqueous solution comprises a fluorescer in the range from 0.0001 g/l to 0.1 g/l

## Patentansprüche

1. Waschmittelzusammensetzung, umfassend von 0,0001 bis 1,0 Gew.-% eines alkoxylierten Bisazofarbstoffs und 2 bis 70 Gew.-% eines Tensids, wobei der alkoxylierte Bisazofarbstoff in Form von: 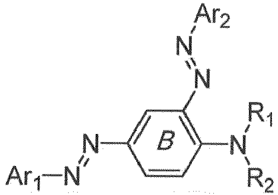 vorliegt,
worin
lediglich R1 und R2 geladene Gruppen tragen können,
Ar₁ und Ar₂ aromatische Gruppen sind, die unter einer Phenyl- und heteroaromatischen Gruppe ausgewählt sind,
R₁ und R₂, unabhängig voneinander, ausgewählt sind unter H, Alkyl, Alkyl-aryl und Aryl, Polyoxyalkylenketten mit 2 bis 20 Wiederholungen, wobei die Polyoxyalkylenkette kovalent an mindestens eine Gruppe ausgewählt aus SO₃⁻, CO₂⁻ gebunden ist, quaternärem Ammonium, OH, -OC1-C20-Alkyl, -OC1-C20-Alken, Säureamid und Ester, wobei mindestens eines von R₁ und R₂ die Polyoxylalkylenkette ist.

2. Waschmittelzusammensetzung nach Anspruch 1, wobei eines oder mehrere von Ar₁ und Ar₂ durch eine oder mehrere Gruppen substituiert sind, die unter Aminen, Säureamiden, Alkyl, Halogeniden, NO₂, CN, Alkylsulfonyl, -Oalkyl und Ester ausgewählt sind.

3. Waschmittelzusammensetzung nach Anspruch 2, wobei eines oder mehrere von Ar₁ und Ar₂ durch eine oder mehrere Gruppen substituiert sind, die unter CN, F, Cl, Br, NO₂, CH₃, C₂H₅, OCH₃, OC₂H₅, NHCOCH₃, COOCH₃, COOC₂H₅, OCOCH₃, OCOC₂H₅ und CH₃SO₂ ausgewählt sind.

4. Waschmittelzusammensetzung nach irgendeinem der vorhergehenden Ansprüche, wobei die Polyoxyalkylenkette unter Ethylenoxid, Propylenoxid, Glycidoloxid, Butylenoxid und Mischungen davon ausgewählt ist.

5. Waschmittelzusammensetzung nach irgendeinem der vorhergehenden Ansprüche, wobei der B-Ring durch eine oder mehrere Gruppen substituiert ist, die unter Säureamid, Oalkyl und Alkyl ausgewählt sind.

6. Waschmittelzusammensetzung nach Anspruch 5, wobei der B-Ring durch eine oder mehrere Gruppen substituiert ist, die unter NHCOCH₃, CH₃ und C₂H₅ ausgewählt sind.

7. Waschmittelzusammensetzung nach irgendeinem der vorhergehenden Ansprüche, wobei die Polyoxyalkylenkette(n) 2 bis 10 Wiederholungseinheiten aufweist.

8. Waschmittelzusammensetzung nach irgendeinem der vorhergehenden Ansprüche, wobei mindestens eines von Ar₁ und Ar₂ eine heteroaromatische Gruppe darstellt.

9. Waschmittelzusammensetzung nach irgendeinem der vorhergehenden Ansprüche, wobei Ar₁ und Ar₂ identisch sind.

10. Waschmittelzusammensetzung nach irgendeinem der vorhergehenden Ansprüche, wobei die heteroaromatische Gruppe unter Thiophen, Thiazol, Isothiazol, Thiadiazol und Pyridinyl ausgewählt ist.

11. Waschmittelzusammensetzung nach irgendeinem der vorhergehenden Ansprüche, wobei die aromatischen Gruppen unter 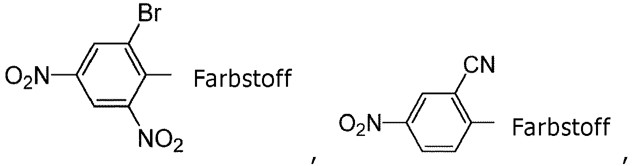 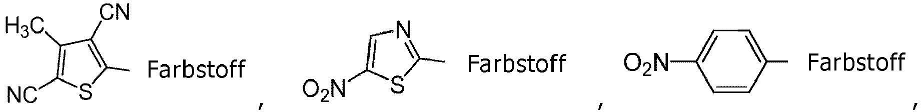 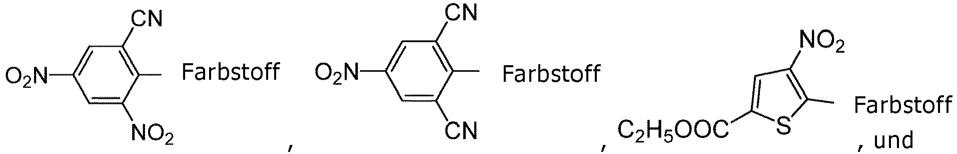 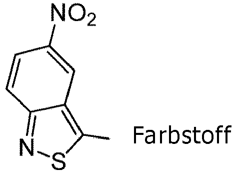 ausgewählt sind.

12. Waschmittelzusammensetzung nach irgendeinem vorhergehenden Anspruch, wobei der alkoxylierte Bisazofarbstoff unter 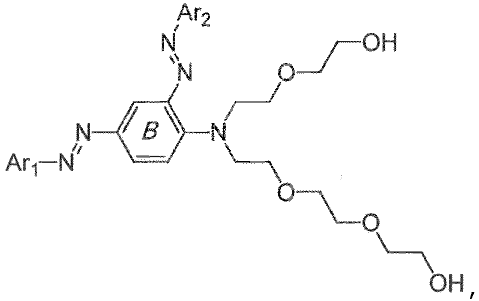 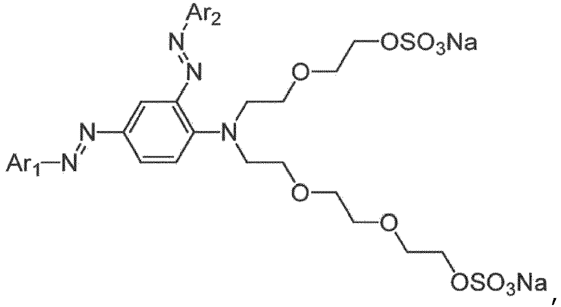 und 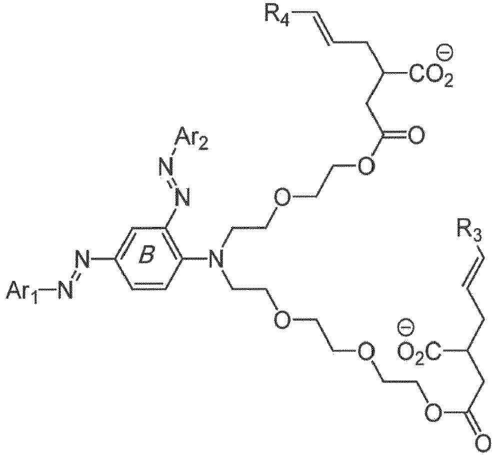 ausgewählt ist,
wobei R₃ und R₄ Alkylgruppen darstellen.

13. Waschmittelzusammensetzung nach Anspruch 12, wobei R₃ und R₄ lineare C3-C10-Alkylketten darstellen.

14. Waschmittelzusammensetzung nach Anspruch 12 oder 13, wobei Ar₁ und Ar₂ 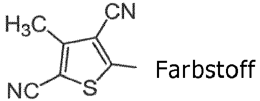 sind.

15. Alkoxylierter Bisazofarbstoff, wie in irgendeinem vorhergehenden Anspruch definiert.

16. Alkoxylierter Bisazofarbstoff, wie in irgendeinem der Ansprüche 12 bis 14 definiert.

17. Haushaltsverfahren zur Behandlung eines Textils, wobei das Verfahren die Schritte umfasst:
(i) Behandeln eines Textils mit einer wässrigen Lösung des alkoxylierten Bisazofarbstoffs, wie irgendeinem der Ansprüche 1 bis 14 definiert wobei die wässrige Lösung 1 ppb bis 5000 ppm des alkoxylierten Bisazofarbstoffs und 0,0 g/l bis 3 g/l eines Tensids umfasst und
(ii) gegebenenfalls Spülen und Trocknen des Textils.

18. Haushaltsverfahren zur Behandlung eines Textils gemäß Anspruch 17, wobei die wässrige Lösung 0,2 bis 3 g/l eines Tensids umfasst.

19. Haushaltsverfahren zur Behandlung eines Textils nach Anspruch 17 oder 18, wobei die wässrige Lösung ein Fluoresziermittel in dem Bereich von 0,0001 g/l bis 0,1 g/l umfasst.

## Revendications

1. Composition de lessive comprenant de 0,0001 à 1,0 % en masse d'un colorant bis azo alcoxylé et de 2 à 70 % en masse d'un tensioactif, dans laquelle le colorant bis azo alcoxylé est de la forme : 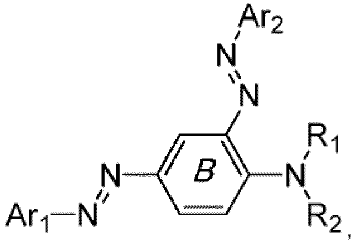 où :
seuls R₁ et R₂ peuvent fournir des groupes chargés ;
Ar₁ et Ar₂ sont des groupes aromatiques choisis parmi : un groupe phényle et hétéroaromatique ;
R₁ et R₂ est indépendamment choisi parmi : H ; un groupe alkyle ; alkyl-aryle ; et aryle ; des chaines polyoxyalkylène ayant de 2 à 20 répétitions, où la chaine polyoxyalkylène est liée de manière covalente à au moins un groupe choisi parmi : SO₃⁻; CO₂⁻ ; ammonium quaternaire ; OH ; -O-(alkyle en C1-C20) ; -O-(alcène en C1-C20) ; amide d'acide et ester, où au moins un de R₁ et R₂ est la chaine polyoxyalkylène.

2. Composition de lessive selon la revendication 1, dans laquelle un ou plusieurs de Ar₁ et Ar₂ est substitué par un ou plusieurs groupes choisis parmi : des amines, des amides d'acides, un groupe alkyle, des halogénures, NO₂, CN, un groupe alkylsulfonyle, -O-alkyle ; et ester.

3. Composition de lessive selon la revendication 2, dans laquelle un ou plusieurs de Ar₁ et Ar₂ est substitué par ou plusieurs groupes choisis parmi : CN ; F ; Cl ; Br ; NO₂ ; CH₃ ; C₂H₅ ; OCH₃ ; OC₂H₅ ; NHCOCH₃ ; COOCH₃ ; COOC₂H₅ ; OCOCH₃ ; OCOC₂H₅; et CH₃SO₂.

4. Composition de lessive selon l'une quelconque des revendications précédentes, dans laquelle la chaine polyoxyalkylène est choisie parmi : l'oxyde d'éthylène ; l'oxyde de propylène ; l'oxyde de glycidol ; l'oxyde de butylène ; et, des mélanges de ceux-ci.

5. Composition de lessive selon l'une quelconque des revendications précédentes, dans laquelle le cycle B est substitué par un ou plusieurs groupes choisis parmi : un amide d'acide ; un groupe O-alkyle ; et, alkyle.

6. Composition de lessive selon la revendication 5, dans laquelle le cycle B est substitué par un ou plusieurs groupes choisis parmi :
NHCOCH₃ ; CH₃ ; et, C₂H₅.

7. Composition de lessive selon l'une quelconque des revendications précédentes, dans laquelle la(les) chaine(s) polyoxyalkylène présente(nt) de 2 à 10 unités répétitives.

8. Composition de lessive selon l'une quelconque des revendications précédentes, dans laquelle au moins un de Ar₁ et Ar₂ est un groupe hétéroaromatique.

9. Composition de lessive selon l'une quelconque des revendications précédentes, dans laquelle Ar₁ et Ar₂ sont identiques.

10. Composition de lessive selon l'une quelconque des revendications précédentes, dans laquelle le groupe hétéroaromatique est choisi parmi : le thiophène ; le thiazole ; l'isothiazole ; le thiadiazole ; et, le pyridinyle.

11. Composition de lessive selon l'une quelconque des revendications précédentes, dans laquelle les groupes aromatiques sont choisis parmi :

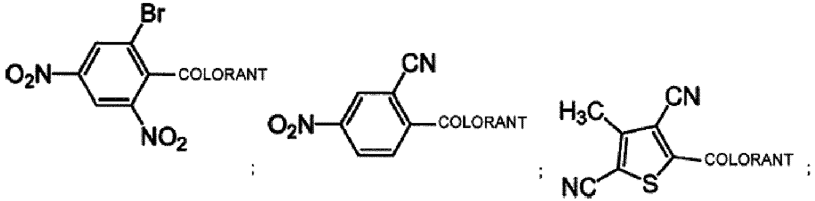

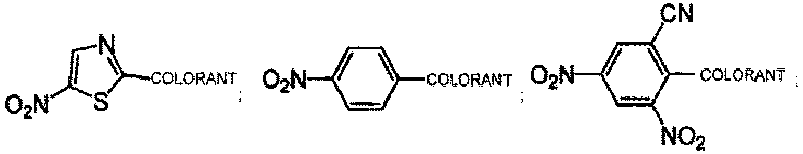

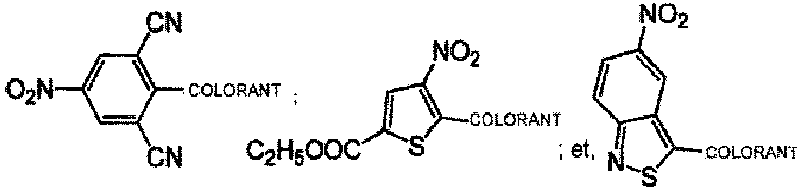

12. Composition de lessive selon l'une quelconque des revendications précédentes, dans laquelle le colorant bis azo alcoxylé est choisi parmi : 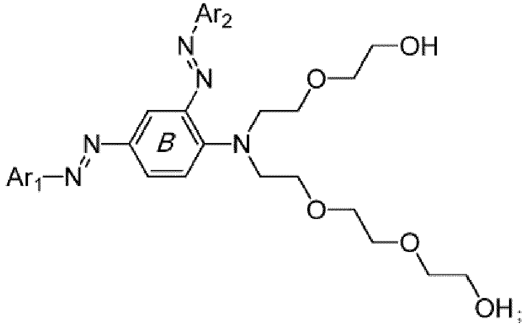 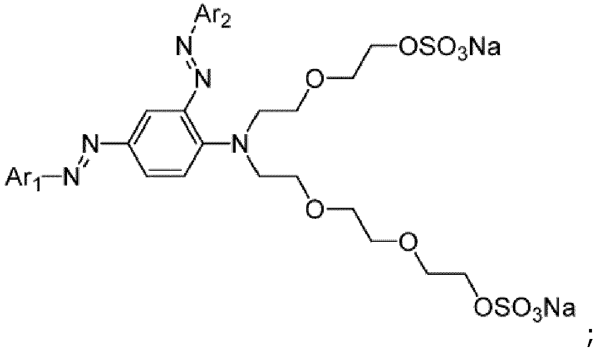 et, 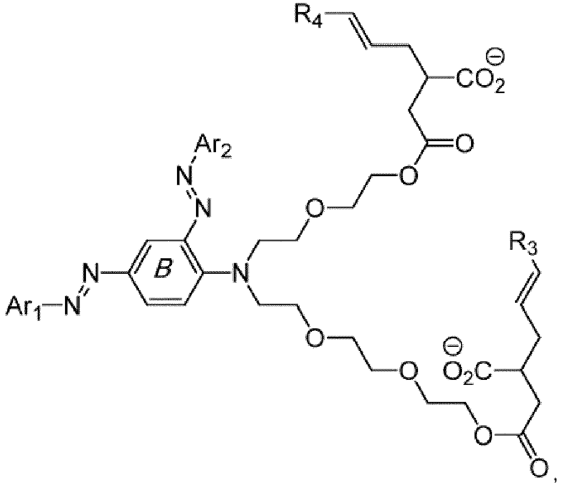 où R₃ et R₄ sont des groupes alkyle.

13. Composition de lessive selon la revendication 12, dans laquelle R₃ et R₄ sont des chaines alkyle linéaires en C3-C10.

14. Composition de lessive selon la revendication 12 ou 13, dans laquelle Ar₁ et Ar₂ sont :

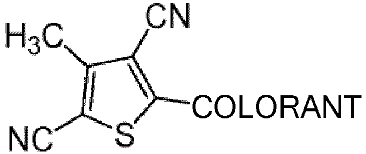

15. Colorant bis azo alcoxylé comme défini dans l'une quelconque des revendications précédentes.

16. Colorant bis azo alcoxylé défini dans l'une quelconque des revendications 12 à 14.

17. Procédé domestique de traitement d'un textile, le procédé comprenant les étapes de :
(i) traitement d'un textile avec une solution aqueuse du colorant bis azo alcoxylé comme défini dans l'une quelconque des revendications 1 à 14, la solution aqueuse comprenant de 1 ppb à 5 000 ppm, du colorant bis azo alcoxylé ; et, de 0,0 g/L à 3 g/L d'un tensioactif ; et,
(ii) le rinçage facultatif et le séchage du textile.

18. Procédé domestique de traitement d'un textile selon la revendication 17, dans lequel la solution aqueuse comprend de 0,2 à 3 g/L d'un tensioactif.

19. Procédé domestique de traitement d'un textile selon la revendication 17 ou 18, dans lequel la solution aqueuse comprend un fluorescent dans l'intervalle de 0,0001 g/l à 0,1 g/l.
